# EUROPEAN PATENT SPECIFICATION

(11) **EP 3 571 957 B1**
(45) Date of publication and mention of the grant of the patent: **27.01.2021**
(21) Application number: 19175469.6
(22) Date of filing: 20.05.2019
(51) Int. Cl.: A47B 13/00, A47B 13/06, F16B 12/44, A47B 3/12

(54) **SUPPORT ELEMENT AND SYSTEM**
TRÄGERELEMENT UND SYSTEM
ÉLÉMENT ET SYSTÈME DE SUPPORT

(30) Priority: 23.05.2018 SE 1850611
(43) Date of publication of application: 27.11.2019
(73) Proprietor: Kant Design AB, 239 34 Skanör (SE)
(72) Inventor: BJÖRCK, Peter, 239 34 Skanör (SE)

(56) References cited:
- DE-A1- 1 429 565
- FR-A1- 2 415 985
- JP-U- S5 975 136
- US-A- 2 740 679

## Description

### Technical Field

The present invention generally relates to a system with support elements, thereof and more particularly to support elements for tables and tables comprising such systems.

### Background

Support elements, e.g. furniture legs, are most commonly attached to the furniture by using screws and hoops, which requires tools and a varied amount of work and skills, both when assembling the furniture and doing the recommended afterward tightening of the screws as well as when demounting the furniture. In addition, furniture mounted accordingly is often a bulky item due to the fact that demounting is often impractical. Inadequate management of screws and hoops can damage the furniture. The load of the furniture will by time debilitate the material around the screws even if the screws are correctly applicated and that will shorten the durability of the furniture. Alternatives have legs that have been pivotally secured, such that the table legs may be folded and the table stored, as in a card table, or alternatively the table legs are folded in pairs, as with a banquet table. These alternate securement means have typically been satisfactory but utilitarian, however, the limitations posed by these more traditional attachments have limited the creativity of the craftsman or designer.

US 6712009 B2 describes a table with folding legs, including a folding steel wire frame having cross-struts, and a table top. Anchor plates are arranged at the table for fixable connection of said cross-struts.

US 2015173504 A1 describes an article of furniture comprising a surface member, a plurality of supports for supporting the support member and one or more stretchers to removably engage at least two of the supports.

US2005/0126452A1 describes a universal table leg having an inverted three-sided pyramid, which may be clamped to a table top. Disadvantages of this table leg assembly include, for example, the presence of an essential part thereof in immediate contact with the upper surface of the table top its arranged to support. Such a part imposes restrictions to the practically available upper surface of the table top. In addition, the visual impression of such a part is not appealing to the minimalistic designer of tables.

Disadvantages of traditional table legs and the table legs of US2005/0126452A1 and of US 6712009 B2 include the need for separate securing means, e.g. screws, clamps or other similar separate means, e.g. anchor plates (US 6712009 B2) or separate supports (US 2015173504 A1), which are needed for the securement of the legs to the corresponding table top. Such separate means have a significant positive impact on the cost of production as well as the time of assembly, which is not desirable for the producer or assembler, respectively.

JPS5975136U discloses a metallic wire support engageably detachably engaged with a support plate by elastic deformation, wherein engaging recessed portions are formed at both end portions of the support plate, The support is composed of a pair of U-shaped leg pieces y, a connecting piece connecting the lower ends of the support pieces, and a pair of engaged pieces connecting the upper ends of the support pieces.

It would thus be advantageous with an improved support element being applicable to the support of e.g. table tops, where one or several of above mentioned disadvantages are eliminated or mitigated.

### Summary

Accordingly, examples of the present invention preferably seek to mitigate, alleviate or eliminate one or more deficiencies, disadvantages or issues in the art, such as the above-identified, singly or in any combination by providing a support element or system according to the appended patent claims.

According to a first aspect in accordance with claim 1, there is provided a system comprising at least one support element and a furniture element, wherein the support element comprising a major upper horizontal member, a minor upper horizontal member, a first major vertical supporting member, a second major vertical supporting member, a first minor vertical supporting member, a second minor vertical supporting member, a first lower horizontal member and a second lower horizontal member, being connected head to tail in a continuous loop. The major upper horizontal member and the minor upper horizontal member are essentially linear, parallel and symmetrically arranged in an upper plane. The length of the major upper horizontal member exceeds the length of the minor upper horizontal member. The first lower horizontal member and the second lower horizontal member are essentially linear, symmetrically arranged in a lower plane and anti-parallel such that their linear imaginary extensions together form a V-shape having the open upper end of the V-shape closer to the major upper horizontal member than to the minor upper horizontal member and having the lower closed end of the V-shape closer to the minor upper horizontal member than to the major upper horizontal member. The length of the first lower horizontal member is essentially equal to the length of the second lower horizontal member. The upper plane is essentially parallel to the lower plane. One end of the first major vertical supporting member and one end of the second major vertical supporting member are connected to one end and the other end, respectively, of the major upper horizontal member, the other end of the first major vertical supporting member and the other end of the second major vertical supporting member are connected to one end of the first lower horizontal member and one end of the second lower horizontal member, respectively. The first major vertical supporting member and the second major vertical supporting member are essentially linear, symmetrically arranged in an outer plane and anti-parallel such that their linear imaginary extensions together form a V-shape having the open upper end of the V-shape closer to the lower plane than to the upper plane and having the lower closed end of the V-shape closer to the upper plane than to the lower plane. The length of the first major vertical supporting member is essentially equal to the length of the second major vertical supporting member. One end of the first minor vertical supporting member and one end of the second minor vertical supporting member are connected to one end and the other end, respectively, of the minor upper horizontal member, the other end of the first minor vertical supporting member and the other end of the second minor vertical supporting member are connected to another end of the first lower horizontal member and another end of the second lower horizontal member, respectively. The first minor vertical supporting member and the second minor vertical supporting member are essentially linear, symmetrically arranged in an inner plane and anti-parallel such that their linear imaginary extensions together form a V-shape having the open upper end of the V-shape closer to the lower plane than to the upper plane and having the lower closed end of the V-shape closer to the upper plane than to the lower plane. The length of the first minor vertical supporting member is essentially equal to the length of the second minor vertical supporting member.

Advantages of a support element according to the first aspect include, but is not limited to, an ability to mount/demount to/from e.g. a suitable tabletop without a need of tools, attachment with minimized wear and tear to the surrounding material of e.g. a tabletop as compared to other supports of the prior-art and a minimization of negative environmental effects and production costs by a minimization of separate parts needed for assembling e.g. furniture.

According to the first aspect, there is provided a system comprising a singularity or plurality of support elements according to the first aspect and a furniture element. The furniture element comprises a singularity or plurality of major incisions and a singularity or plurality of minor incisions. The major incisions and the minor incisions are adapted to be reversibly mechanically connectable to the major upper horizontal member and to the minor upper horizontal member, respectively.

Further examples of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

### Description of the Drawings

These and other aspects, features and advantages of which examples of the invention are capable of will be apparent and elucidated from the following description of examples of the present invention, reference being made to the accompanying drawings, in which:

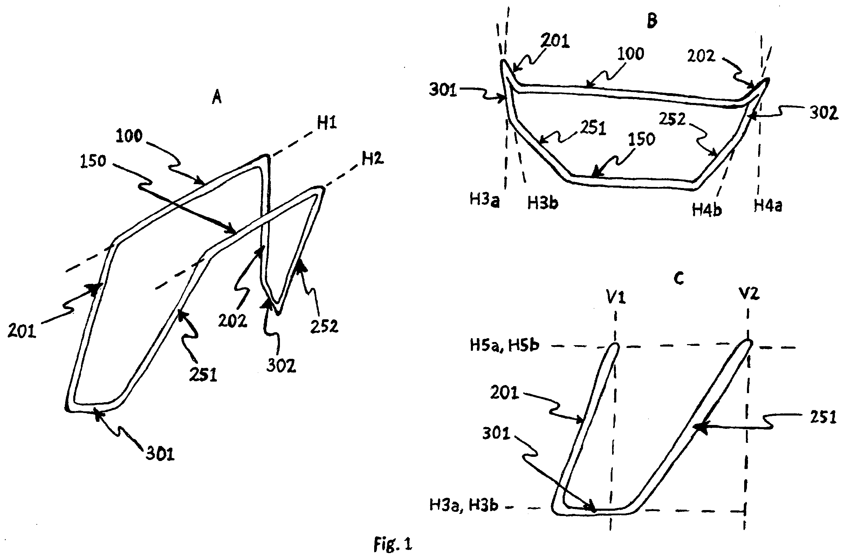

Fig. 1A is a perspective view of a support element of the invention comprising a major upper horizontal member (100) extending in a first horizontal direction (H1), a minor upper horizontal member (150) extending in a second horizontal direction and being shorter than the major upper horizontal member (100), a first major vertical supporting member (201), a second major vertical supporting member (202) having essentially the same length as the first major vertical supporting member (201), a first minor vertical supporting member (251), a second minor vertical supporting member (252) having essentially the same length as the first minor vertical supporting member (251), a first lower horizontal member (301) and a second lower horizontal member (302) having essentially the same length as the first lower horizontal member (301), according to examples of the disclosure;
Fig. 1B is a view from the top of the support element of Fig. 1A showing an essentially parallel spatial relationship between the major upper horizontal member (100) and the minor upper horizontal member (150) and a non-parallel spatial relationship between the first lower horizontal member (301) and the second lower horizontal member (302), wherein the respective central axis of each of these (H3b and H4b, respectively) forms an angle in relationship to a corresponding axis (H3a and H4a, respectively) in the same plane and being perpendicular to the extension of the major upper horizontal member (100) and the minor upper horizontal member (150), according to examples of the disclosure;
Fig. 1C is a view from the side of the support element of Fig. 1A showing the extension of the first major vertical supporting member (201) forming an angle versus a plane encompassing a first vertical direction (V1) and the extension of the major upper horizontal member (100), the extension of the first minor vertical supporting member (251) forming another angle versus a plane encompassing a second vertical direction (V2) and the extension of the minor upper horizontal member (150), the upper ends of the first major vertical supporting member (201) and the first minor vertical supporting member (251) being arranged in an upper horizontal plane and the first lower horizontal member (301) and the second lower horizontal member (302) (not shown) extending in a lower horizontal plane, according to examples of the disclosure;

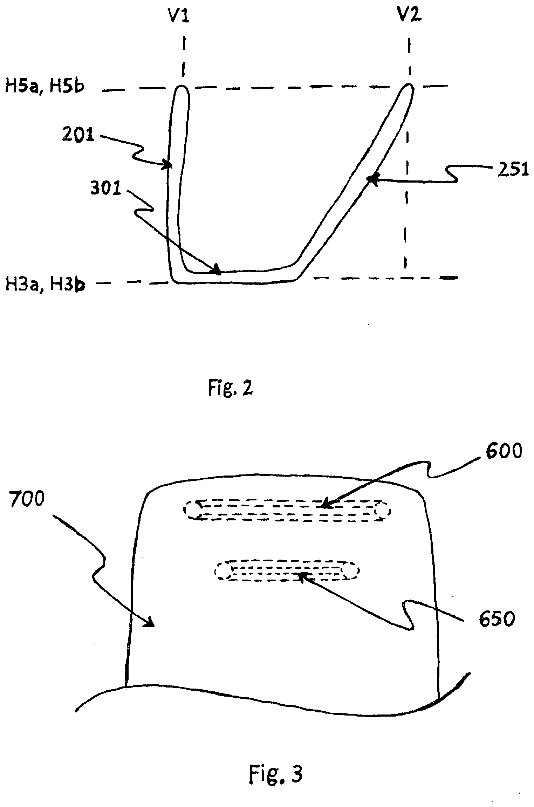

Fig. 2 is a view from the side of a support element of the invention showing the extension of the first major vertical supporting member (201) coinciding with a plane encompassing the first vertical direction (V1) and the extension of the major upper horizontal member (100), and the extension of the first minor vertical supporting member (251) forming an angle versus a plane encompassing the second vertical direction (V2) and the extension of the minor upper horizontal member (150), the upper ends of the first major vertical supporting member (201) and the first minor vertical supporting member (251) being arranged in an upper horizontal plane and the first lower horizontal member (301) and the second lower horizontal member (302) (not shown) extending in a lower horizontal plane, according to examples of the disclosure;
Fig. 3 illustrates a furniture element (700) comprising a major incision (600) arranged perpendicular to the extension of the furniture element (700) and close to its distal end, a minor incision (650) arranged perpendicular to the extension of the furniture element (700) and further from its distal end than the major incision (600), according to examples of the disclosure;

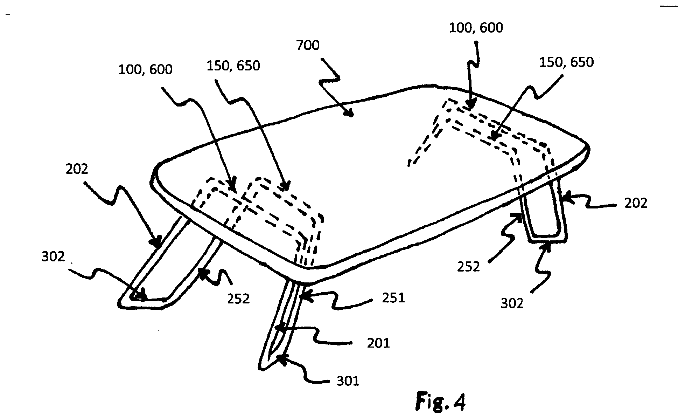

Fig. 4 is a perspective view of a sheet formed furniture element (700) comprising two attachment regions for support elements of the invention, each region consisting of minor and a major incision (650,600) close to the ends of furniture element (700), onto which two support elements of the invention is attached to form a system of the invention in the form of a fully mounted piece of furniture which may be placed on a horizontal surface, according to examples of the disclosure;

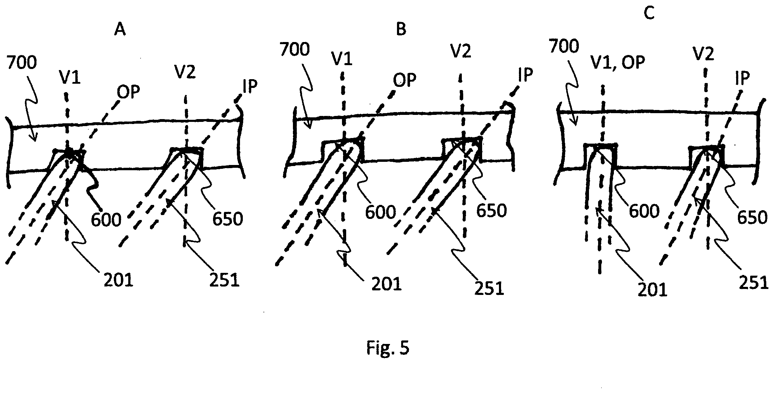

Fig. 5A is a cross-sectional view from the side of a furniture element (700) comprising a major incision (600) and a minor incision (650) having cross-sectional shapes in the form of distorted squares encompassing the major upper horizontal member (100) and the minor upper horizontal member (150) of the support element of Fig 1A-C, in which the first major vertical supporting member (201) and the second major vertical supporting member (202) resides in an outer plane (OP), and the first minor vertical supporting member (251) and the second minor vertical supporting member (252) resides in an inner plane (IP), according to examples of the disclosure;
Fig. 5B is a cross-sectional view from the side of a furniture element (700) comprising a major incision (600) and a minor incision (650) having cross-sectional shapes in the form of squares encompassing the major upper horizontal member (100) and the minor upper horizontal member (150) of the support element of Fig 1A-C, in which the first major vertical supporting member (201) and the second major vertical supporting member (202) resides in an outer plane (OP), and the first minor vertical supporting member (251) and the second minor vertical supporting member (252) resides in an inner plane (IP), according to examples of the disclosure;
Fig. 5C is a cross-sectional view from the side of a furniture element (700) comprising a major incision (600) and a minor incision (650) having cross-sectional shapes in the form of squares encompassing the major upper horizontal member (100) and the minor upper horizontal member (150) of the support element of Fig 2, in which the first major vertical supporting member (201) and the second major vertical supporting member (202) resides in an outer plane (OP) coinciding with the first vertical direction (V1), and the first minor vertical supporting member (251) and the second minor vertical supporting member (252) resides in an inner plane (IP), according to examples of the disclosure;

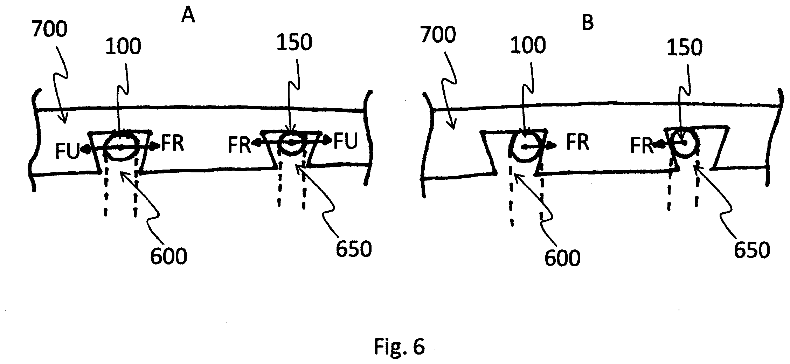

Fig. 6A is a cross-sectional view from the side of a furniture element (700) comprising a major incision (600) and a minor incision (650) having cross-sectional shapes in the form of distorted squares which expands in the direction from the outside towards the inside thereof, the incisions encompassing the major upper horizontal member (100) and the minor upper horizontal member (150) of a support element of the invention, in which the inherent force of resilience (FR) of the support element essentially equals the force of user (FR) applied to the support element, according to examples of the disclosure;
Fig. 6B shows the furniture element (700) of Fig. 6A, in which no force of user (FR) is applied, whereby the inherent force of resilience (FR) of the support element forces the major upper horizontal member (100) and the minor upper horizontal member (150) towards each other as limited by the facing sides of the major incision (600) and the minor incision (650), respectively, according to examples of the disclosure;

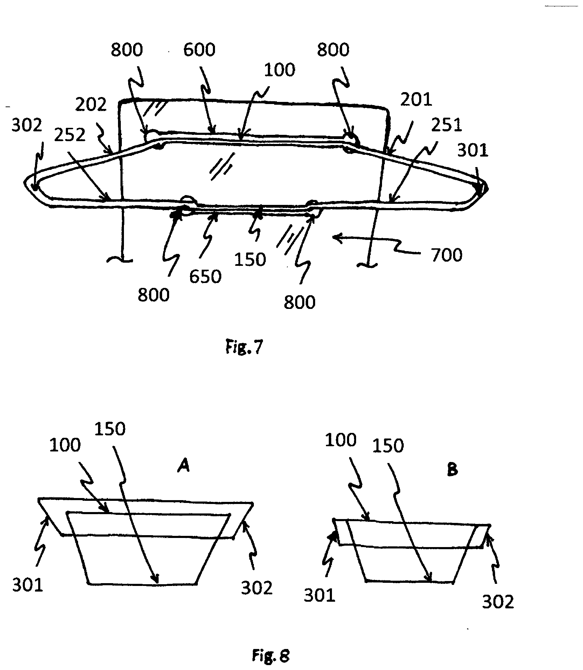

Fig. 7 is a view from the bottom side of a system of the invention, comprising a furniture element (700) with a major incision (600) and a minor incision (650) having cross-sectional shapes in the form of distorted squares which expands in the direction from the outside towards the inside thereof, the incisions are further provided with circular recesses (800) having a diameter exceeding the width of the respective incision, wherein the support element of Fig 1A-C is mounted and wherein the inherent resiliency thereof forces the major upper horizontal member (100) and the minor upper horizontal member (150) towards each other within the incisions such that the support element practically can be removed only from the furniture element (700) upon forcing the major upper horizontal member (100) apart from the minor upper horizontal member (150), according to examples of the disclosure;
Fig. 8A is a view from the top of an upper imaginary surface, defined by the major upper horizontal member 100, the minor upper horizontal member 150 and two straight lines joining the most nearby ends of these with each other, and a lower imaginary surface, defined by the first lower horizontal member 301, the second lower horizontal member 302 and two straight lines joining the most nearby ends of these with each other, of the support element of Fig 1A-C, in which these surfaces partly overlap and the major upper horizontal member 100 is encompassed by the vertical projection of the lower imaginary surface, according to examples of the disclosure; and
Fig. 8B is a view from the top of an upper imaginary surface, defined by the major upper horizontal member 100, the minor upper horizontal member 150 and two straight lines joining the most nearby ends of these with each other, and a lower imaginary surface, defined by the first lower horizontal member 301, the second lower horizontal member 302 and two straight lines joining the most nearby ends of these with each other, of the support element of Fig 2, in which these surfaces partly overlap and the major upper horizontal member 100 coincide with a straight line between the ends of the first lower horizontal member 301 and the second lower horizontal member 302, according to examples of the disclosure;

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

A support element of the invention essentially comprises a major upper horizontal member 100, a minor upper horizontal member 150, a first major vertical supporting member 201, a second major vertical supporting member 202, a first minor vertical supporting member 251, a second minor vertical supporting member 252, a first lower horizontal member 301 and a second lower horizontal member 302. These parts may be connected to each other head to tail to form a continuous loop. A rod of a suitable material, such as e.g. steel, iron, aluminum or any other suitable material well known to the skilled person, may be bent to form some or all of these parts of such continuous loop. The resulting ends of individual parts, groups of parts or all parts may then be joined by e.g. welding. The support element may also be manufactured, partly or fully, by casting or molding of a suitable metallic, plastic or polymeric material.

The intra-compartmental organization and spatial relationship of/between the parts of the present support element is essential for its advantageous function as further disclosed herein.

The upper horizontal member 100 and the minor upper horizontal member 150 may be essentially straight, i.e. linear, parallel and symmetrically arranged relative each other and the rest of the support element to enable facile production and mountability to the corresponding furniture element 700. The major upper horizontal member 100 and the minor upper horizontal member 150, which may preferably be shorter than the major upper horizontal member 100, together form a unit which is in mechanical contact with the furniture element 700 when in use. The first lower horizontal member 301 and the second lower horizontal member 302 may, analogously, be essentially linear and symmetrically arranged relative each other and the rest of the support element. They may, however, preferably be non-parallel relative each other to provide optimal stability to the support element-furniture element 700 combined system, such as e.g. in the case of a table arrangement. For example, their linear imaginary extensions may together form a V-shape having the open upper end thereof closer to the major upper horizontal member 100 than to the minor upper horizontal member 150. The lower closed end of that V-shape is then closer to the minor upper horizontal member 150 than to the major upper horizontal member 100. The first lower horizontal member 301 and the second lower horizontal member 302, which may preferably be of equal length, together form a unit which is in mechanical contact with e.g. the floor or ground onto which the element-furniture element 700 combined system typically may be placed.

The major upper horizontal member 100 and the minor upper horizontal member 150 may reside in the same plane, e.g. an upper plane. The first lower horizontal member 301 and the second lower horizontal member 302 may, analogously, simultaneously reside in another plan, e.g. a lower plane. The former plane, e.g. the upper plane, may typically be parallel with the latter plane, e.g. the lower plane. Such a spatial relationship advantageously enable parallel placement of a sheet formed furniture element 700, e.g. a table top, relative the floor or ground, which is desirable.

An imaginary surface, called the upper imaginary surface, is defined by the major upper horizontal member 100, the minor upper horizontal member 150 and two straight lines joining the most nearby ends of these with each other. Another imaginary surface, called the lower imaginary surface, is defined by the first lower horizontal member 301, the second lower horizontal member 302 and two straight lines joining the most nearby ends of these with each other. The upper imaginary surface and the lower imaginary surface are brought in an essentially constant spatial relationship relative each other by employment of the first major vertical supporting member 201, the second major vertical supporting member 202, the first minor vertical supporting member 251 and the second minor vertical supporting member 252. Hence, one end of the first major vertical supporting member 201 and one end of the second major vertical supporting member 202 are connected to one end and the other end, respectively, of the major upper horizontal member 100. The other end of the first major vertical supporting member 201 and the other end of the second major vertical supporting member 202 are connected to one end of the first lower horizontal member 301 and one to end of the second lower horizontal member 302, respectively. The length of the first major vertical supporting member 201 may preferably be essentially equal to the length of the second major vertical supporting member 202. Analogously, one end of the first minor vertical supporting member 251 and one end of the second minor vertical supporting member 252 are connected to one end and the other end, respectively, of the minor upper horizontal member 150. The other end of the first minor vertical supporting member 251 and the other end of the second minor vertical supporting member 252 are connected to another end of the first lower horizontal member 301 and another end of the second lower horizontal member 302, respectively. The length of the first minor vertical supporting member 251 may preferably be essentially equal to the length of the second minor vertical supporting member 252.

The edges, defined by the first lower horizontal member 301 and the second lower horizontal member 302, of the vertical projection of the lower imaginary surface may preferably be located outside the vertical projection of the upper imaginary surface. Such a relationship advantageously provides an arrangement in which a mounted furniture element 700, e.g. a table top, is stable towards applied horizontal forces from either side, i.e. in the direction of the extension of the lower imaginary surface. Hence, the first major vertical supporting member 201 and the second major vertical supporting member 202 may be essentially linear, symmetrically arranged in an outer plane OP and anti-parallel such that their linear imaginary extensions together form a V-shape having the open upper end of the V-shape closer to the lower plane than to the upper plane, i.e. having the lower closed end of the V-shape closer to the upper plane than to the lower plane. For example, the angle between the extension of the first major vertical supporting member 201 and the extension of the second major vertical supporting member 202 may be in a range of 5° to 90°, such as 10° to 80° or 20° to 70°. Simultaneously, the first minor vertical supporting member 251 and the second minor vertical supporting member 252 may be essentially linear, symmetrically arranged in an inner plane IP and anti-parallel such that their linear imaginary extensions together form a V-shape having the open upper end of the V-shape closer to the lower plane than to the upper plane, i.e. having the lower closed end of the V-shape closer to the upper plane than to the lower plane. For example, the angle between the extension of the first minor vertical supporting member 251 and the extension of the second minor vertical supporting member 252 may be in a range of 5° to 90°, such as 15° to 85° or 25° to 75°.

One edge, defined by an imaginary line between one end of the first lower horizontal member 301 and one end of the second lower horizontal member 302, of the vertical projection of the lower imaginary surface may be located in the periphery of or, preferably, fully outside the vertical projection of the upper imaginary surface. Simultaneously, another edge, defined by an imaginary line between the other end of the first lower horizontal member 301 and the other end of the second lower horizontal member 302, of the vertical projection of the lower imaginary surface may fully or partly coincide with the vertical projection of the upper imaginary surface. Such a relationship advantageously provides an arrangement in which a mounted furniture element 700, e.g. a table top, is stable towards applied horizontal forces from the side opposite the side of the imaginary line being fully located outside the vertical projection of the upper imaginary surface. Hence, the angle between the outer plane OP and a plane coinciding with the extension of said major upper horizontal member 100 and a first vertical direction V1, may be in a range of 0° to 45°, such as e.g. 5° to 40° or 10° to 30°. The lower ends of the first major vertical supporting member 201 and of the second major vertical supporting member 202 may be closer to the major upper horizontal member 100 than to the minor upper horizontal member 150, the lower ends being the ends closer to the lower plane than to the upper plane. In combination thereto, the angle between the inner plane IP and a plane coinciding with the extension of said minor upper horizontal member 150 and a second vertical direction V2 may be in a range of 5° to 45°, such as e.g. 5° to 40° or 10° to 30°. The lower ends of the first minor vertical supporting member 251 and of the second minor vertical supporting member 252 may reside within the perpendicular projection of a plane defined by the infinite extensions of the major upper horizontal member 100 and the infinite extensions of the minor upper horizontal member 150, the lower ends being the ends closer to the lower plane than to the upper plane. The angle between the extension of the first lower horizontal member 301 and the extension of the second lower horizontal member 302 may be in a range of 5° to 90°, such as e.g. 10° to 80° or 25° to 75°.

The support element of the invention may be used for support of a furniture element 700. The thereby formed system may typically be a piece of furniture, such as e.g. a table. Such a table may, for example, be rectangle-shaped and comprise two support elements and one furniture element 700 in the form of a table-top. Other exemplary combinations for the provision of tables include two or three support elements and a circular, elliptic or triangular furniture element 700 in the form of a table-top. The skilled artisan will be readily aware the details on how to combine such parts for the provision of an esthetically appealing, stable and functional table. The furniture element 700 may comprise a singularity or plurality of major incisions 600 and a singularity or plurality of minor incisions 650. Typically, one major incision 600 and one minor incision 650 is together acting as the receiver of one support element. Accordingly, the major incision 600 and the minor incision 650 are adapted to be reversibly mechanically connected to the major upper horizontal member 100 and to the minor upper horizontal member 150, respectively. The incisions 600, 650 may have cross-sectional shapes selected from, for example, square, distorted square, rectangle, distorted rectangle, parallelogram, trapezoid and isosceles trapezoid. For example, a suitable shape which expands inwards from the outside towards the inside of the furniture element 700, may be employed. Advantages of such a shape include a minimization of the risk of the support element unintentionally disengaging from the furniture element 700. This effect may be further enhanced when the support element is provided with inherent resilience which is providing a force of resilience FR opposite the way it would have to bend during its disengagement from incisions 600, 650, having such suitable inwards expanding shapes, as illustrated in e.g. Fig 6B. This results in a locking of the major upper horizontal member 100 and the minor upper horizontal member 150 within the incisions 600, 650 by being forced towards each other. Upon application of a load onto the furniture element 700 of an arrangement of e.g. Fig. 6B, such load may result in additional forces having vectors in the same direction as the force of resilience FR vectors of e.g. Fig. 6B. Hence, the applied load may result in an even more advantageous secure locking within the incisions 600, 650. The incisions 600, 650 may be further provided with circular recesses 800 adjacent to the ends thereof. Such circular recesses 800 may have a diameter exceeding the exposed width of the respective incision. The exposed width may be equal to or slightly larger than the corresponding part of the support element which it is engaging with, i.e. the major upper horizontal member 100 or the minor upper horizontal member 150. Such a combination of features advantageously enables the first major vertical supporting member 201, the second major vertical supporting member 202, the first minor vertical supporting member 251 and the second minor vertical supporting member 252 to exit the surface of the furniture element 700 at an angle versus a perpendicular extension thereof. For example, an accordingly designed resilient support element may be provided with a force during mounting to enable entrance of the major upper horizontal member 100 and the minor upper horizontal member 150 into the incisions 600, 650. Upon release of this force, the support element will lock in the inwards expanding shaped incisions 600, 650, while the first major vertical supporting member 201, the second major vertical supporting member 202, the first minor vertical supporting member 251 and the second minor vertical supporting member 252 simultaneously are exiting from the respective circular recess 800 at an angle.

According to one embodiment, a table system may comprise at least one support element, such as three or preferably two support elements, and a furniture element 700, such as a table top. One or preferably all of the support elements may comprise a major upper horizontal member 100, a minor upper horizontal member 150, a first major vertical supporting member 201, a second major vertical supporting member 202, a first minor vertical supporting member 251, a second minor vertical supporting member 252, a first lower horizontal member 301 and a second lower horizontal member 302, of which all may be connected head to tail in a continuous loop. The major upper horizontal member 100 and the minor upper horizontal member 150 may be essentially linear, essentially parallel and essentially symmetrically arranged in an upper plane. The length of the major upper horizontal member 100 may exceed the length of the minor upper horizontal member 150. The first lower horizontal member 301 and the second lower horizontal member 302 may be essentially linear, essentially symmetrically arranged in a lower plane and anti-parallel such that their linear imaginary extensions together form a V-shape having the open upper end of the V-shape closer to the major upper horizontal member 100 than to the minor upper horizontal member 150 and having the lower closed end of the V-shape closer to the minor upper horizontal member 150 than to the major upper horizontal member 100. The length of the first lower horizontal member 301 may be essentially equal to the length of the second lower horizontal member 302. The upper plane may be essentially parallel to the lower plane. One end of the first major vertical supporting member 201 and one end of the second major vertical supporting member 202 may be connected to one end and the other end, respectively, of the major upper horizontal member 100. The other end of the first major vertical supporting member 201 and the other end of the second major vertical supporting member 202 may be connected to one end of the first lower horizontal member 301 and one end of the second lower horizontal member 302, respectively. The first major vertical supporting member 201 and the second major vertical supporting member 202 may be essentially linear, essentially symmetrically arranged in an outer plane OP and anti-parallel such that their linear imaginary extensions together form a V-shape having the open upper end of the V-shape closer to the lower plane than to the upper plane and having the lower closed end of the V-shape closer to the upper plane than to the lower plane. The length of the first major vertical supporting member 201 may be essentially equal to the length of the second major vertical supporting member 202. One end of the first minor vertical supporting member 251 and one end of the second minor vertical supporting member 252 may be connected to one end and the other end, respectively, of the minor upper horizontal member 150. The other end of the first minor vertical supporting member 251 and the other end of the second minor vertical supporting member 252 may be connected to another end of the first lower horizontal member 301 and another end of the second lower horizontal member 302, respectively. The first minor vertical supporting member 251 and the second minor vertical supporting member 252 may be essentially linear, essentially symmetrically arranged in an inner plane IP and anti-parallel such that their linear imaginary extensions together form a V-shape having the open upper end of the V-shape closer to the lower plane than to the upper plane and having the lower closed end of the V-shape closer to the upper plane than to the lower plane. The length of the first minor vertical supporting member 251 may be essentially equal to the length of the second minor vertical supporting member 252). The furniture element 700 may comprise a singularity or plurality of major incisions 600 and a singularity or plurality of minor incisions 650. The major incisions 600 and the minor incisions 650 may be adapted to be reversibly mechanically connectable to the major upper horizontal member 100 and to the minor upper horizontal member 150, respectively. Advantages of a table according to this embodiment include a more facile and rapid assembly from its constituting parts and less such constituting parts, as compared to tables according to the prior art, which tables are dependent on additional parts for fastening and which parts for fastening are time consuming in the assembly.

The present invention has been described above with reference to specific examples. However, other examples than the above described are equally possible within the scope of the invention. The different features and steps of the invention may be combined in other combinations than those described. The scope of the invention is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. System comprising at least one support element and a furniture element (700), wherein
- said support element comprising a major upper horizontal member (100), a minor upper horizontal member (150), a first major vertical supporting member (201), a second major vertical supporting member (202), a first minor vertical supporting member (251), a second minor vertical supporting member (252), a first lower horizontal member (301) and a second lower horizontal member (302) being connected head to tail in a continuous loop;
- said major upper horizontal member (100) and said minor upper horizontal member (150) being essentially linear, essentially parallel and essentially symmetrically arranged in an upper plane;
- the length of said major upper horizontal member (100) exceeds the length of said minor upper horizontal member (150);
- said first lower horizontal member (301) and said second lower horizontal member (302) being essentially linear, essentially symmetrically arranged in a lower plane and anti-parallel such that their linear imaginary extensions together form a V-shape having the open upper end of said V-shape closer to said major upper horizontal member (100) than to said minor upper horizontal member (150) and having the lower closed end of said V-shape closer to said minor upper horizontal member (150) than to said major upper horizontal member (100);
- the length of said first lower horizontal member (301) being essentially equal to the length of said second lower horizontal member (302);
- said upper plane being essentially parallel to said lower plane;
- one end of said first major vertical supporting member (201) and one end of said second major vertical supporting member (202) being connected to one end and the other end, respectively, of said major upper horizontal member (100), the other end of said first major vertical supporting member (201) and the other end of said second major vertical supporting member (202) being connected to one end of said first lower horizontal member (301) and one end of said second lower horizontal member (302), respectively;
- said first major vertical supporting member (201) and said second major vertical supporting member (202) being essentially linear, essentially symmetrically arranged in an outer plane (OP) and anti-parallel such that their linear imaginary extensions together form a V-shape having the open upper end of said V-shape closer to said lower plane than to said upper plane and having the lower closed end of said V-shape closer to said upper plane than to said lower plane;
- the length of said first major vertical supporting member (201) being essentially equal to the length of said second major vertical supporting member (202);
- one end of said first minor vertical supporting member (251) and one end of said second minor vertical supporting member (252) being connected to one end and the other end, respectively, of said minor upper horizontal member (150), the other end of said first minor vertical supporting member (251) and the other end of said second minor vertical supporting member (252) being connected to another end of said first lower horizontal member (301) and another end of said second lower horizontal member (302), respectively;
- said first minor vertical supporting member (251) and said second minor vertical supporting member (252) being essentially linear, essentially symmetrically arranged in an inner plane (IP) and anti-parallel such that their linear imaginary extensions together form a V-shape having the open upper end of said V-shape closer to said lower plane than to said upper plane and having the lower closed end of said V-shape closer to said upper plane than to said lower plane;
- the length of said first minor vertical supporting member (251) being essentially equal to the length of said second minor vertical supporting member (252);
- said furniture element (700) comprises a singularity or plurality of major incisions (600) and a singularity or plurality of minor incisions (650); and
- said major incisions (600) and said minor incisions (650) being adapted to be reversibly mechanically connectable to said major upper horizontal member (100) and to said minor upper horizontal member (150), respectively.

2. System according to claim 1, wherein
- an angle between said outer plane (OP) and a plane coinciding with the extension of said major upper horizontal member (100) and a first vertical direction (V1), being in a range of 0° to 45°; and
- the lower ends of said first major vertical supporting member (201) and of said second major vertical supporting member (202) being closer to said major upper horizontal member (100) than to said minor upper horizontal member (150), said lower ends being the ends closer to said lower plane than to said upper plane.

3. System according to any one of the preceding claims, wherein
- an angle between said inner plane (IP) and a plane coinciding with the extension of said minor upper horizontal member (150) and a second vertical direction (V2), being in a range of 5° to 45°; and
- the lower ends of said first minor vertical supporting member (251) and of said second minor vertical supporting member (252) residing within the perpendicular projection of a plane defined by the infinite extensions of said major upper horizontal member (100) and the infinite extensions of said minor upper horizontal member (150), said lower ends being the ends closer to said lower plane than to said upper plane.

4. System according to any one of the preceding claims, wherein an angle between the extension of said first major vertical supporting member (201) and the extension of said second major vertical supporting member (202) being in a range of 5° to 90°.

5. System according to any one of the preceding claims, wherein an angle between the extension of said first minor vertical supporting member (251) and the extension of said second minor vertical supporting member (252) being in a range of 5° to 90°.

6. System according to any one of the preceding claims, wherein an angle between the extension of said first lower horizontal member (301) and the extension of said second lower horizontal member (302) being in a range of 5° to 90°.

7. System according to any one of the preceding claims, wherein said major incisions (600) or said minor incisions (650) independently having an internal cross-sectional shape selected from the group of shapes consisting of square, distorted square, rectangle, distorted rectangle, parallelogram, trapezoid and isosceles trapezoid.

8. System according to any one of the preceding claims, wherein said major incisions (600) or said minor incisions (650) independently are further provided with circular recesses (800) adjacent to the ends thereof, said circular recesses (800) having a diameter exceeding the width of the respective of said major incisions (600) or said minor incisions (650).

9. System according to any one of the preceding claims, comprising two of said support elements and wherein said furniture element (700) being a table top.

## Patentansprüche

1. System mit mindestens einem Stützelement und einem Möbelelement (700), wobei
- besagtes Stützelement, umfassend ein oberes horizontales Hauptelement (100), ein oberes horizontales Nebenelement (150), ein erstes vertikales Hauptstützelement (201), ein zweites vertikales Hauptstützelement (202), ein erstes vertikales Nebenstützelement (251) ein zweites vertikales Nebenstützelement (252), ein erstes unteres horizontales Element (301) und ein zweites unteres horizontales Element (302), durchgehend in einer Endlosschleife verbunden ist;
- wobei das obere horizontale Hauptelement (100) und das obere horizontale Nebenelement (150) im wesentlichen linear, im wesentlichen parallel und im wesentlichen symmetrisch in einer oberen Ebene angeordnet sind;
- wobei die Länge des oberen horizontalen Hauptelements (100) die Länge des oberen horizontalen Nebenelements (150) übersteigt;
- wobei das erste untere horizontale Element (301) und das zweite untere horizontale Element (302) im wesentlichen linear, im wesentlichen symmetrisch in einer unteren Ebene angeordnet und antiparallel sind, so dass ihre linearen imaginären Ausdehnungen zusammen eine V-Form bilden, bei der das offene obere Ende der V-Form näher am oberen horizontalen Hauptelement (100) als zum oberen horizontalen Nebenelement (150) ist und das untere geschlossene Ende der V-Form näher am oberen horizontalen Nebenelement (150) als am oberen horizontalen Hauptelement (100) ist;
- wobei die Länge des ersten unteren horizontalen Elements (301) im wesentlichen der Länge des zweiten unteren horizontalen Elements (302) entspricht;
- wobei die obere Ebene im Wesentlichen parallel zurr unteren Ebene ist;
- wobei ein Ende des ersten vertikalen Hauptstützelements (201) und ein Ende des zweiten vertikalen Hauptstützelements (202) mit einem Ende bzw. dem anderen Ende des oberen horizontalen Hauptelements (100) verbunden ist, wobei das andere Ende des ersten vertikalen Hauptstützelements (201) und das andere Ende des zweiten vertikalen Hauptstützelements (202) mit einem Ende des ersten unteren horizontalen Elements (301) bzw. einem Ende des zweiten unteren horizontalen Elements (302) verbunden ist;
- wobei das erste vertikale Hauptstützelement (201) und das zweite vertikale Hauptstützelement (202) im Wesentlichen linear, im Wesentlichen symmetrisch in einer äußeren Ebene (OP) angeordnet und antiparallel sind, so dass ihre linearen imaginären Ausdehnungen zusammen eine V-Form bilden, wobei das offene obere Ende der V-Form näher an der unteren Ebene als an der oberen Ebene ist und das untere geschlossene Ende der V-Form näher an der oberen Ebene als an der unteren Ebene ist;
- wobei die Länge des ersten vertikalen Hauptstützelements (201) im Wesentlichen der Länge des zweiten vertikalen Hauptstützelements (202) entspricht;
- wobei ein Ende des ersten vertikalen Nebenstützelements (251) und ein Ende des zweiten vertikalen Nebenstützelements (252) mit einem Ende bzw. dem anderen Ende des oberen horizontalen Nebenelements (150) verbunden sind, wobei das andere Ende des ersten vertikalen Nebenstützelements (251) und das andere Ende des zweiten vertikalen Nebenstützelements (252) mit einem anderen Ende des ersten unteren horizontalen Elements (301) und einem anderen Ende des zweiten unteren horizontalen Elements (302) verbunden ist;
- wobei das erste vertikale Nebenstützelement (251) und das zweite vertikale Nebenstützelement (252) im Wesentlichen linear, im Wesentlichen symmetrisch in einer inneren Ebene (IP) angeordnet und antiparallel sind, so dass ihre linearen imaginären Verlängerungen zusammen eine V-Form bilden, wobei das offene obere Ende der V-Form näher zur unteren Ebene als zu oberen Ebene liegt und das untere geschlossene Ende der V-Form näher an der oberen Ebene als an der unteren Ebene liegt;
- wobei die Länge des ersten vertikalen Nebenstützelements (251) im Wesentlichen der Länge des zweiten vertikalen Nebenstützelements (252) entspricht;
- wobei das Möbelelement (700) eine Singularität oder Pluralität von größeren Einschnitten (600) und eine Singularität oder Pluralität kleinerer Einschnitte (650) umfasst; und
- wobei die größeren Einschnitte (600) und die kleineren Einschnitte (650) so angepasst sind, dass sie reversibel mechanisch mit dem oberen horizontalen Hauptelement (100) bzw. dem oberen horizontalen Nebenelement (150) verbunden werden können.

2. System nach Anspruch 1, wobei
- ein Winkel zwischen der äußeren Ebene (OP) und einer Ebene mit der Ausdehnung des oberen horizontalen Hauptelements (100) und einer ersten vertikalen Richtung (V1) zusammenfällt und in einem Bereich von 0° bis 45° liegt; und
- die unteren Enden des ersten großen vertikalen Stützelements (201) und des zweiten vertikalen Hauptstützelements (202) näher an dem oberen oberen horizontalen Hauptelement (100) als an dem oberen oberen horizontalen Nebenelement (150) liegen und die unteren Enden die Enden sind, die näher an der unteren Ebene als an der oberen Ebene liegen.

3. System nach einem der vorhergehenden Ansprüche, wobei
- ein Winkel zwischen der inneren Ebene (IP) und einer Ebene mit der Ausdehnung des kleinen oberen horizontalen Elements (150) und einer zweiten vertikalen Richtung (V2) zusammenfällt und in einem Bereich von 5° bis 45° liegt; und
- sich die unteren Enden des ersten kleinen vertikalen Stützelements (251) und des zweiten kleinen vertikalen Stützelements (252) innerhalb der senkrechten Projektion einer Ebene befinden, die durch die unendlichen Ausdehnungen des oberen horizontalen Hauptelements (100) und die unendlichen Ausdehnungen des oberen horizontalen Nebenelements (150) definiert ist, wobei die unteren Enden die Enden sind, die näher an der unteren als an der oberen Ebene liegen.

4. System nach einem der vorhergehenden Ansprüche, wobei ein Winkel zwischen der Ausdehnung des ersten vertikalen Hauptstützelements (201) und der Ausdehnung des zweiten vertikalen Hauptstützelements (202) in einem Bereich von 5° bis 90° liegt.

5. System nach einem der vorhergehenden Ansprüche, wobei ein Winkel zwischen der Ausdehnung des ersten kleinen vertikalen Stützelements (251) und der Ausdehnung des zweiten kleinen vertikalen Stützelements (252) in einem Bereich von 5° bis 90° liegt.

6. System nach einem der vorhergehenden Ansprüche, wobei ein Winkel zwischen der Ausdehnung des ersten unteren horizontalen Elements (301) und der Ausdehnung des zweiten unteren horizontalen Elements (302) in einem Bereich von 5° bis 90° liegt.

7. System nach einem der vorhergehenden Ansprüche, wobei die Hauptschnitte (600) oder die Nebenschnitte (650) unabhängig voneinander eine innere Querschnittsform aufweisen, die aus der Gruppe von Formen bestehend aus Quadrat, verzerrtem Quadrat, Rechteck, verzerrtem Rechteck, Parallelogramm, Trapez und gleichschenkligem Trapez ausgewählt wurde.

8. System nach einem der vorhergehenden Ansprüche, wobei die Hauptschnitte (600) oder die Nebenschnitte (650) unabhängig voneinander kreisförmige Aussparungen (800) neben ihren Enden aufweisen, wobei die kreisförmigen Aussparungen (800) einen Durchmesser haben, der die Breite der jeweiligen Hauptschnitte (600) oder der Nebenschnitte (650) überschreitet.

9. System nach einem der vorhergehenden Ansprüche, umfassend zwei der Stützelemente, wobei das Möbelelement (700) eine Tischplatte ist.

## Revendications

1. Système comprenant au moins un élément de support et un élément de meuble (700), dans lequel
- ledit élément de support comprenant un élément horizontal supérieur principal (100), un élément horizontal supérieur inférieur (150), un premier élément support vertical majeur (201), un deuxième élément support vertical majeur (202), un premier élément support vertical mineur (251), un second élément de support vertical mineur (252), un premier élément horizontal inférieur (301) et un second élément horizontal inférieur (302) étant connecté tête-bêche en une boucle continue;
- ledit élément horizontal supérieur principal (100) et ledit élément horizontal supérieur mineur (150) étant essentiellement linéaires, essentiellement parallèles et disposés essentiellement symétriquement dans un plan supérieur;
- la longueur dudit élément horizontal supérieur principal (100) dépasse la longueur dudit élément horizontal supérieur mineur (150);
- ledit premier élément horizontal inférieur (301) et ledit deuxième élément horizontal inférieur (302) étant essentiellement linéaires, disposes essentiellement symétriquement dans un plan inférieur et anti-parallèles de telle sorte que leurs extensions imaginaires linéaires ont ensemble une forme en V ayant l'extrémité supérieure ouverte de ladite forme en V plus proche dudit élément horizontal supérieur majeur (100) audit élément horizontal supérieur mineur (150) et ayant l'extrémité inférieure fermée de ladite forme en V plus proche dudit élément horizontal supérieur mineur (150) que dudit élément horizontal supérieur principal (100);
- la longueur dudit premier élément horizontal inférieur (301) étant sensiblement égale à la longueur dudit deuxième élément horizontal inférieur (302);
- ledit plan supérieur étant essentiellement parallèle audit plan inférieur;
- une extrémité dudit premier élément de support vertical principal (201) et une extrémité dudit second élément de support vertical principal (202) étant reliées à une extrémité et l'autre extrémité, respectivement, dudit élément horizontal supérieur principal (100), l'autre extrémité dudit premier élément de support vertical majeur (201) et l'autre extrémité dudit second élément de support vertical majeur (202) étant connectés à une extrémité dudit premier élément horizontal inférieur (301) et à une extrémité dudit second élément horizontal inférieur (302), respectivement;
- ledit premier élément de support vertical principal (201) et ledit second 35 élément de support vertical principal (202) étant essentiellement linéaires, essentiellement disposés symétriquement dans un plan extérieur (OP) et antiparallèle de sorte que leurs extensions imaginaires linéaires forment ensemble une forme en V ayant l'extrémité supérieure ouverte de ladite forme en V plus proche dudit plan inférieur que dudit plan supérieur et ayant l'extrémité inférieure fermée de ladite forme en V plus proche dudit plan supérieur que dudit plan inférieur;
- la longueur dudit premier élément de support vertical majeur (201) étant sensiblement égale à la longueur dudit deuxième élément de support vertical majeur (202);
- une extrémité dudit premier élément de support vertical mineur (251) et une extrémité dudit second élément de support vertical mineur (252) étant reliées respectivement à une extrémité et à l'autre extrémité dudit élément horizontal supérieur mineur (150), l'autre extrémité dudit premier élément de support vertical mineur (251) et l'autre extrémité dudit second élément de support vertical mineur (252) étant reliées à une autre extrémité dudit premier élément horizontal inférieur (301) et à une autre extrémité dudit un deuxième élément horizontal inférieur (302), respectivement;
- ledit premier élément de support vertical mineur (251) et ledit deuxième élément mineur élément de support vertical (252) étant essentiellement linéaire, essentiellement disposé symétriquement dans un plan intérieur (IP) et antiparallèle de telle sorte que leurs extensions imaginaires linéaires forment ensemble une forme en V ayant l'extrémité supérieure ouverte de ladite forme en V plus proche de ladite plan inférieur audit plan supérieur et ayant l'extrémité inférieure fermée de ladite forme en V plus proche dudit plan supérieur que dudit plan inférieur;
- la longueur dudit premier élément de support vertical mineur (251) étant essentiellement égale à la longueur dudit second élément de support vertical mineur (252);
- ledit élément de meuble (700) comprend une singularité ou une pluralité d'incisions majeures (600) et une singularité ou une pluralité d'incisions mineures (650); et
- lesdites incisions principales (600) et lesdites incisions mineures (650) étant adaptées pour être reliées mécaniquement de manière réversible audit élément horizontal supérieur principal (100) et audit élément horizontal supérieur mineur (150), respectivement.

2. Système selon la revendication 1, dans lequel
- un angle entre ledit plan extérieur (OP) et un plan coïncidant avec l'extension dudit élément horizontal supérieur principal (100) et une première direction verticale (V1), étant dans une plage de 0 ° à 45 °; et
- les extrémités inférieures dudit premier élément de support vertical majeur (201) et dudit deuxième élément de support vertical principal (202) étant plus proche dudit élément horizontal supérieur principal (100) que dudit élément horizontal supérieur mineur (150), lesdites extrémités inférieures étant les extrémités plus proches dudit plan inférieur que dudit plan supérieur.

3. Système selon l'une des revendications précédentes, dans lequel
- un angle entre ledit plan intérieur (IP) et un plan coïncidant avec l'extension dudit élément horizontal supérieur mineur (150) et une seconde direction verticale (V2), étant dans une plage de 5° à 45°; et
- les extrémités inférieures dudit premier élément de support vertical mineur (251) et dudit second élément de support vertical mineur (252) résidant à l'intérieur de la projection perpendiculaire d'un plan défini par les extensions infinies dudit élément horizontal supérieur principal (100) et les extensions infinies dudit élément horizontal supérieur mineur (150), lesdites extrémités inférieures étant les extrémités plus proches dudit plan inférieur que dudit plan supérieur.

4. Système selon l'une des revendications précédentes, dans lequel un angle entre l'extension dudit premier élément de support vertical majeur (201) et l'extension dudit second élément de support vertical majeur (202) est compris entre 5° et 90°.

5. Système selon l'une des revendications précédentes, dans lequel un angle entre l'extension dudit premier élément de support vertical mineur (251) et l'extension dudit second élément de support vertical mineur (252) étant compris entre 5° et 90°.

6. Système selon l'une des revendications précédentes, dans lequel un angle entre l'extension dudit premier élément horizontal inférieur (301) et l'extension dudit deuxième élément horizontal inférieur (302) étant compris entre 5° et 90°.

7. Système selon l'une des revendications précédentes, dans lequel lesdites incisions majeures (600) ou lesdites incisions mineures (650) présentent indépendamment une forme en coupe transversale choisie dans le groupe de formes consistant en un carré, un carré déformé, un rectangle, un rectangle déformé, un parallélogramme, un trapèze et un trapèze isocèle.

8. Système selon l'une des revendications précédentes, dans lequel lesdites incisions majeures (600) ou lesdites incisions mineures (650) sont en outre fournies indépendamment avec des évidements circulaires (800) adjacents à leurs extrémités, lesdits évidements circulaires (800) ayant un diamètre dépassant la largeur desdites incisions majeures respectives (600) ou desdites incisions mineures (650).

9. Système selon l'une des revendications précédentes, comprenant deux desdits éléments de support et dans lequel ledit élément de meuble (700) étant un plateau de table.
